# EUROPEAN PATENT APPLICATION

(11) **EP 4 697 834 A1**
(43) Date of publication of application: **18.02.2026**
(21) Application number: 25193872.6
(22) Date of filing: 04.08.2025
(51) Int. Cl.: H04W 72/12, H04W 84/02

(54) **WIFI DEVICE AND COMMUNICATION METHOD THEREFOR, SYSTEM AND RELATED DEVICES**

(30) Priority: 14.08.2024 CN 202411118920
(71) Applicant: Amlogic (Shanghai) Co., Ltd., Shanghai 201315 (CN)
(72) Inventor: XU, Guiquan, Shanghai (CN); FAN, Hong, Shanghai (CN); HAO, Suzhi, Shanghai (CN); WU, Hongjin, Shanghai (CN); WANG, Bokai, Shanghai (CN)
(74) Representative: Maiwald GmbH

(57) **Abstract**

A WiFi device and a communication method therefor, a system, and related devices, the method including: acquiring a request signal for requesting exclusive access to a shared medium and a corresponding service priority signal of a Zigbee device; acquiring a delay tolerance of the Zigbee device for a grant signal for indicating that exclusive access to the shared medium is granted, according to the request signal for requesting exclusive access to the shared medium and the corresponding service priority signal transmitted by the Zigbee device; generating the grant signal for indicating that exclusive access to the shared medium is granted to the Zigbee device in a timely manner, according to the delay tolerance of the Zigbee device for the grant signal for indicating that exclusive access to the shared medium is granted. The technical solution of the present disclosure can improve the communication quality of a Zigbee device.

## Description

### CROSS-REFERENCE TO RELATED APPLICATIONS

This application claims priority to Chinese Patent Application No. 202411118920.3, filed on August 14, 2024.

### TECHNICAL FIELD

The present disclosure relates to the technical field of communication, and in particular to a WiFi device and a communication method therefor, a system, and related devices.

### BACKGROUND

The proliferation of networks, especially in the 2.4 GHz band, has led to challenges in trying to utilize multiple network protocols. For example, Zigbee, Thread, and Bluetooth Low Energy (BLE) all operate in the 2.4 GHz spectrum and are considered low-power protocols. However, Wireless Fidelity (WiFi) with much higher transmission power levels also operates in this spectrum. Therefore, these various protocols may interfere with each other, resulting in a drop in throughput or data loss.

At present, when WiFi devices and Zigbee devices coexist, the communication quality of Zigbee devices still needs to be improved.

### SUMMARY

The problem solved by the embodiments of the present disclosure is to provide a WiFi device and a communication method therefor, a system and related devices, which can improve the communication quality of Zigbee devices.

To solve the above problem, a communication method for a WiFi device is provided in the embodiments of the present disclosure, comprising:
acquiring a request signal for requesting exclusive access to a shared medium and a corresponding service priority signal of a Zigbee device;
acquiring a delay tolerance of the Zigbee device for a grant signal for indicating that exclusive access to the shared medium is granted, according to the request signal for requesting exclusive access to the shared medium and the corresponding service priority signal transmitted by the Zigbee device;
generating the grant signal for indicating that exclusive access to the shared medium is granted to the Zigbee device in a timely manner, according to the delay tolerance of the Zigbee device for the grant signal for indicating that exclusive access to the shared medium is granted.

Optionally, the step of acquiring a delay tolerance of the Zigbee device for a grant signal for indicating that exclusive access to the shared medium is granted, according to the request signal for requesting exclusive access to the shared medium and the corresponding service priority signal transmitted by the Zigbee device, comprising:
if the request signal for requesting exclusive access to the shared medium and the corresponding service priority signal transmitted by the Zigbee device are both converted from a first level signal to a second level signal, the Zigbee device has a low delay tolerance for the grant signal for indicating that exclusive access to the shared medium is granted;
if the request signal for requesting exclusive access to the shared medium transmitted by the Zigbee device is converted from a first level signal to a second level signal and the corresponding service priority signal is a first level signal, the Zigbee device has a high delay tolerance for the grant signal for indicating that exclusive access to the shared medium is granted.

Optionally, if the Zigbee device has a low delay tolerance for the grant signal for indicating that exclusive access to the shared medium is granted, the step of generating the grant signal for indicating that exclusive access to the shared medium is granted to the Zigbee device in a timely manner, according to the delay tolerance of the Zigbee device for the grant signal for indicating that exclusive access to the shared medium is granted, comprising:
if the WiFi device is in a data transmission state, after immediately terminating the transmission of data to a peer WiFi device and sending a notification message of terminating the transmission of data to the peer WiFi device, the grant signal for indicating that exclusive access to the shared medium is granted is immediately transmitted to the Zigbee device;
if the WiFi device is in a data reception state, after terminating the transmission of data to a peer WiFi device and enabling its own passive response reply special control frame mechanism, the grant signal for indicating that exclusive access to the shared medium is granted is immediately transmitted to the Zigbee device;
if the WiFi device is in an idle state, after sending a notification message of terminating the transmission of data to the peer WiFi device, the grant signal for indicating that exclusive access to the shared medium is granted is immediately transmitted to the Zigbee device.

Optionally, if the Zigbee device has a high delay tolerance for the grant signal for indicating that exclusive access to the shared medium is granted, the step of generating the grant signal for indicating that exclusive access to the shared medium is granted to the Zigbee device in a timely manner, according to the delay tolerance of the Zigbee device for the grant signal for indicating that exclusive access to the shared medium is granted, comprising:
if the WiFi device is in a data transmission state, after completing the transmission of data currently being transmitted to a peer WiFi device and sending a notification message of terminating the transmission of data to the peer WiFi device, the grant signal for indicating that exclusive access to the shared medium is granted is immediately transmitted to the Zigbee device;
if the WiFi device is in a data reception state, after terminating the reception of data transmitted by a peer WiFi device, enabling its own passive response reply special control frame mechanism and sending a notification message of terminating the transmission of data to the peer WiFi device, the grant signal for indicating that exclusive access to the shared medium is granted is immediately transmitted to the Zigbee device;
if the WiFi device is in an idle state, after sending a notification message of terminating the transmission of data to the peer WiFi device, the grant signal for indicating that exclusive access to the shared medium is granted is immediately transmitted to the Zigbee device.

Optionally, the step of sending a notification message of terminating the transmission of data to the peer WiFi device, comprising: using a NULL frame, a CTS frame or a Self-CTS frame to send the notification message of terminating the transmission of data to the peer WiFi device.

Optionally, the special control frame comprises at least one of an ACK frame, a CTS frame and a BA frame.

Optionally, if the Zigbee device cancels the request for requesting exclusive access to the shared medium, further comprising: prohibiting the transmission of the grant signal for indicating that exclusive access to the shared medium is granted to the Zigbee device.

Optionally, the step of Zigbee device cancels the request for requesting exclusive access to the shared medium, comprising: the Zigbee device converting the request signal for requesting exclusive access to the shared medium from a second level signal to a first level signal.

Optionally, the request signal for requesting exclusive access to the shared medium comprises a GPIO signal.

Optionally, the grant signal for indicating that exclusive access to the shared medium is granted comprises a GPIO signal.

Optionally, the service priority signal comprises a GPIO signal.

Correspondingly, a WiFi device is further provided in the embodiments of the present disclosure, comprising:
a first acquisition circuit, configured to acquire a request signal for requesting exclusive access to a shared medium and a corresponding service priority signal of a Zigbee device;
a second acquisition circuit, configured to acquire a delay tolerance of the Zigbee device for a grant signal for indicating that exclusive access to the shared medium is granted, according to the request signal for requesting exclusive access to the shared medium and the corresponding service priority signal transmitted by the Zigbee device;
a grant signal generating circuit, configured to generate the grant signal for indicating that exclusive access to the shared medium is granted to the Zigbee device in a timely manner, according to the delay tolerance of the Zigbee device for the grant signal for indicating that exclusive access to the shared medium is granted.

Correspondingly, a communication system is further provided in the embodiments of the present disclosure, comprising a WiFi device as described above and a Zigbee device.

Correspondingly, a computer program product is further provided in the embodiments of the present disclosure, comprising a computer program/instruction, wherein the computer program/instruction is used to implement the communication method for a WiFi device as described in any embodiment above when executed by a processor.

Correspondingly, a device is further provided in the embodiments of the present disclosure, comprising at least one memory and at least one processor, the memory stores one or more computer instructions, wherein the one or more computer instructions are executed by the processor to implement the communication method for a WiFi device as described in any embodiment above.

Correspondingly, a storage medium is further provided in the embodiments of the present disclosure, wherein the storage medium stores one or more computer instructions, wherein the one or more computer instructions are used to implement the communication method for a WiFi device as described in any embodiment above.

Compared with the prior art, the technical solutions in the embodiments of the present disclosure have the advantages as follows:
The communication method for a WiFi device provided in the embodiments of the present disclosure comprises: acquiring a request signal for requesting exclusive access to a shared medium and a corresponding service priority signal of a Zigbee device; acquiring a delay tolerance of the Zigbee device for a grant signal for indicating that exclusive access to the shared medium is granted, according to the request signal for requesting exclusive access to the shared medium and the corresponding service priority signal transmitted by the Zigbee device; and generating the grant signal for indicating that exclusive access to the shared medium is granted to the Zigbee device in a timely manner, according to the delay tolerance of the Zigbee device for the grant signal for indicating that exclusive access to the shared medium is granted.

In the communication method for a WiFi device provided in the embodiments of the present disclosure, generate the grant signal for indicating that exclusive access to the shared medium is granted to the Zigbee device in a timely manner, according to the delay tolerance of the Zigbee device for the grant signal for indicating that exclusive access to the shared medium is granted, so that the Zigbee device can acquire the right to use the shared medium in a timely manner, and reduce the probability that the Zigbee device abandons data transmission due to failure to acquire the grant signal for indicating that exclusive access to the shared medium is granted in a timely manner, so as to improve the communication quality of the Zigbee device.

### BRIEF DESCRIPTION OF THE DRAWINGS

FIG. 1 shows a flow diagram of an embodiment of a communication method for a WiFi device according to the present disclosure;
FIG. 2 shows a schematic diagram of three-wire coexistence between a WiFi device and a Zigbee device according to the present disclosure;
FIG. 3 shows a schematic structural diagram of an embodiment of a WiFi device according to the present disclosure;
FIG. 4 shows a schematic structural diagram of an optional hardware structure of a device according to the present disclosure.

### DETAILED DESCRIPTION

As can be seen from the background, when WiFi devices and Zigbee devices coexist, the communication quality of Zigbee devices still needs to be improved.

In order to solve the technical problem, the communication method for a WiFi device provided in the embodiments of the present disclosure comprises: acquiring a request signal for requesting exclusive access to a shared medium and a corresponding service priority signal of a Zigbee device; acquiring a delay tolerance of the Zigbee device for a grant signal for indicating that exclusive access to the shared medium is granted, according to the request signal for requesting exclusive access to the shared medium and the corresponding service priority signal transmitted by the Zigbee device; and generating the grant signal for indicating that exclusive access to the shared medium is granted to the Zigbee device in a timely manner, according to the delay tolerance of the Zigbee device for the grant signal for indicating that exclusive access to the shared medium is granted.

In the communication method for a WiFi device provided in the embodiments of the present disclosure, the step of generating the grant signal for indicating that exclusive access to the shared medium is granted to the Zigbee device in a timely manner, according to the delay tolerance of the Zigbee device for the grant signal for indicating that exclusive access to the shared medium is granted enables the Zigbee device to acquire the right to use the shared medium in a timely manner, thereby reducing the probability that the Zigbee device abandons data transmission due to failure to acquire the grant signal for indicating that exclusive access to the shared medium is granted in a timely manner, so as to improve the communication quality of the Zigbee device.

To make the above objectives, features, and advantages in the embodiments of the present disclosure more apparent and easier to understand, specific embodiments of the present disclosure are described in detail below with reference to the accompanying drawings.

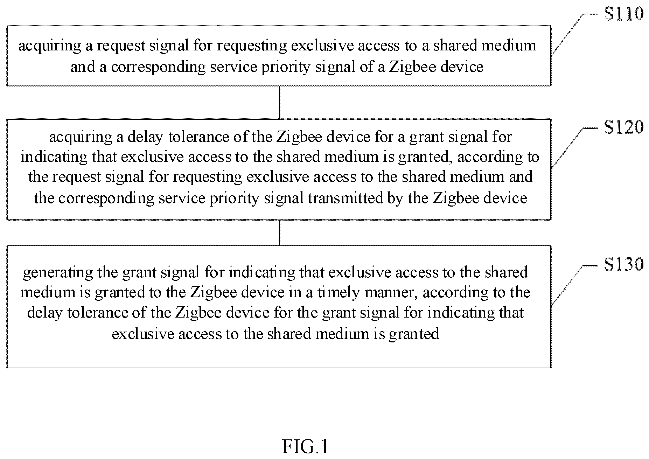

FIG. 1 shows a flow diagram of an embodiment of a communication method for a WiFi device according to the present disclosure. As shown in FIG. 1, a communication method for a WiFi device may specifically include the following steps:
Step S110: acquiring a request signal for requesting exclusive access to a shared medium and a corresponding service priority signal of a Zigbee device;
Step S120: acquiring a delay tolerance of the Zigbee device for a grant signal for indicating that exclusive access to the shared medium is granted, according to the request signal for requesting exclusive access to the shared medium and the corresponding service priority signal transmitted by the Zigbee device;
Step S130: generating the grant signal for indicating that exclusive access to the shared medium is granted to the Zigbee device in a timely manner, according to the delay tolerance of the Zigbee device for the grant signal for indicating that exclusive access to the shared medium is granted.

Please continue to refer to FIG. 1 and execute step S110 to acquire a request signal for requesting exclusive access to a shared medium and a corresponding service priority signal of a Zigbee device.

The step of acquiring a request signal for requesting exclusive access to a shared medium and a corresponding service priority signal of a Zigbee device provides a basis for the subsequent step of acquiring a delay tolerance of the Zigbee device for a grant signal for indicating that exclusive access to the shared medium is granted, according to the request signal for requesting exclusive access to the shared medium and the corresponding service priority signal transmitted by the Zigbee device.

Zigbee devices are terminal devices that communicate using the Zigbee communication protocol. Specifically, a terminal device including a Zigbee module is referred to as a Zigbee device. Of course, while using the Zigbee communication protocol, Zigbee devices can also use other communication protocols for communication.

In some embodiments, Zigbee devices work together with WiFi devices in the 2.4 GHz Industrial, Scientific and Medical (ISM) frequency band.

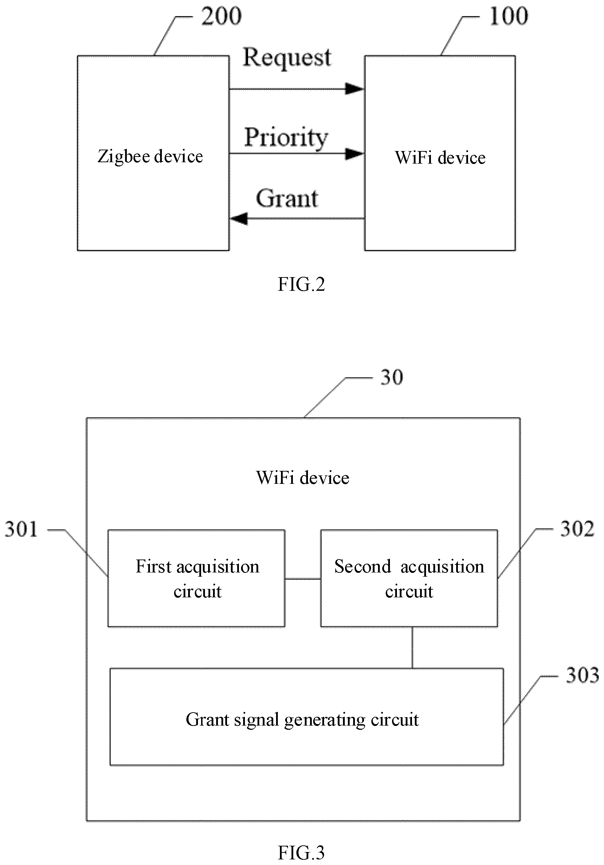

As shown in FIG. 2, in some embodiments, the WiFi device 100 and the Zigbee device 200 achieve coexistence on the ISM band through three signals. Specifically, the WiFi device 100 and the Zigbee device 200 achieve coexistence on the ISM band through a request signal (Request) for requesting exclusive access to a shared medium, a service priority signal (Priority), and a grant signal (Grant) for indicating that exclusive access to the shared medium is granted.

Among them, the request signal (Request) for requesting exclusive access to the shared medium, the service priority signal (Priority), and the grant signal (Grant) for indicating that exclusive access to the shared medium is granted are respectively generated by corresponding interfaces. Therefore, the interface for generating the request signal (Request) for requesting exclusive access to the shared medium, the interface for generating the service priority signal (Priority), and the interface for generating the grant signal (Grant) for indicating that exclusive access to the shared medium is granted are collectively referred to as a three-wire coexistence interface.

In some embodiments, the interface for generating the request signal (Request) for requesting exclusive access to the shared medium, the interface for generating the service priority signal (Priority), and the interface for generating the grant signal (Grant) for indicating that exclusive access to the shared medium is granted are respectively general-purpose input/output (GPIO) interfaces.

It can be understood that at least part of the interface for generating the request signal (Request) for requesting exclusive access to the shared medium, the interface for generating the service priority signal (Priority), and the interface for generating the grant signal (Grant) for indicating that exclusive access to the shared medium is granted can also be other types of interfaces other than the GPIO interface, and those skilled in the art can set them according to actual needs, which is not limited here.

In some embodiments, a Zigbee device and a WiFi device can also coexist on the ISM band through four signals or even more signals.

In some embodiments, a Zigbee device and a WiFi device can also coexist on other frequency bands other than the ISM band, which is not limited here.

In some embodiments, a Zigbee device and a WiFi device compete for the right to use the shared medium through the Packet Traffic Arbitration (PTA) mechanism.

In some embodiments, the PTA module set inside the WiFi device uses the PTA mechanism to arbitrate the right to use the shared medium. Correspondingly, when data transmission is required, the Zigbee device generates a request signal (Request) for requesting exclusive access to the shared medium to the PTA module in the WiFi device, so that when the PTA module in the WiFi device receives the request signal (Request) for requesting exclusive access to the shared medium, it uses the PTA mechanism to arbitrate the right to use the shared medium.

In some embodiments, a request signal (Request) for requesting exclusive access to a shared medium defaults to a first level signal. When data transmission is required, a Zigbee device converts a request signal (Request) for requesting exclusive access to a shared medium from a first level signal to a second level signal, so as to generate a request signal (Request) for requesting exclusive access to the shared medium to the PTA module in the WiFi device.

In some embodiments, the first level signal is a low level signal, and the second level signal is a high level signal. In other words, the request signal (Request) for requesting exclusive access to a shared medium is a low level signal by default. Correspondingly, when data transmission is required, the Zigbee device converts the request signal (Request) for requesting exclusive access to a shared medium from a low level signal to a high level signal to generate a request signal (Request) for requesting exclusive access to a shared medium to the PTA module in the WiFi device.

In some embodiments, the request signal (Request) for requesting exclusive access to the shared medium may also be set to a high level signal by default. Correspondingly, when data transmission is required, the Zigbee device converts the request signal (Request) for requesting exclusive access to the shared medium from a high level signal to a low level signal, so as to generate a request signal (Request) for requesting exclusive access to the shared medium to the PTA module in the WiFi device. Those skilled in the art know how to convert the level signal, which will not be described in detail here.

Please continue to refer to FIG. 1, and execute step S120 to acquire a delay tolerance of the Zigbee device for a grant signal for indicating that exclusive access to the shared medium is granted, according to the request signal for requesting exclusive access to the shared medium and the corresponding service priority signal transmitted by the Zigbee device.

The step of acquiring a delay tolerance of the Zigbee device for a grant signal for indicating that exclusive access to the shared medium is granted, according to the request signal for requesting exclusive access to the shared medium and the corresponding service priority signal transmitted by the Zigbee device provides a basis for the subsequent step of generating the grant signal for indicating that exclusive access to the shared medium is granted to the Zigbee device in a timely manner, according to the delay tolerance of the Zigbee device for the grant signal for indicating that exclusive access to the shared medium is granted.

In some embodiments, when data reception is required, the Zigbee device has a low delay tolerance for the grant signal for indicating that exclusive access to the shared medium is granted; when data transmission is required, the Zigbee device has a high delay tolerance for the grant signal for indicating that exclusive access to the shared medium is granted.

Correspondingly, according to the request signal for requesting exclusive access to a shared medium transmitted by the Zigbee device and the corresponding service priority signal, it is possible to determine whether the Zigbee device needs to transmit data or receive data, thereby determining the delay tolerance of the Zigbee device for the grant signal for indicating that exclusive access to a shared medium is granted.

Specifically, when the request signal for requesting exclusive access to a shared medium and the corresponding service priority signal transmitted by the Zigbee device are both converted from a first level signal to a second level signal, the Zigbee device has a low delay tolerance for the grant signal for indicating that exclusive access to a shared medium is granted; when the request signal for requesting exclusive access to a shared medium transmitted by the Zigbee device is converted from a first level signal to a second level signal and the corresponding service priority signal is a first level signal, the Zigbee device has a high delay tolerance for the grant signal for indicating that exclusive access to a shared medium is granted.

For the corresponding service priority signal, please refer to the aforementioned content on the request signal for requesting exclusive access to a shared medium, which will not be repeated.

Please continue to refer to FIG. 1, and execute step S130 to generate the grant signal for indicating that exclusive access to the shared medium is granted to the Zigbee device in a timely manner, according to the delay tolerance of the Zigbee device for the grant signal for indicating that exclusive access to the shared medium is granted.

The step of generating the grant signal for indicating that exclusive access to the shared medium is granted to the Zigbee device in a timely manner, according to the delay tolerance of the Zigbee device for the grant signal for indicating that exclusive access to the shared medium is granted enables the Zigbee device to acquire the right to use the shared medium in a timely manner, thereby reducing the probability that the Zigbee device abandons data transmission due to failure to acquire the grant signal for indicating that exclusive access to the shared medium is granted in a timely manner, so as to improve the communication quality of the Zigbee device.

In some embodiments, when the Zigbee device has a low delay tolerance for the grant signal for indicating that exclusive access to the shared medium is granted, the step of generating the grant signal for indicating that exclusive access to the shared medium is granted to the Zigbee device in a timely manner, according to the delay tolerance of the Zigbee device for the grant signal for indicating that exclusive access to the shared medium is granted includes the following three situations:
(I) if the WiFi device is in a data transmission state, after immediately terminating the transmission of data to a peer WiFi device and sending a notification message of terminating the transmission of data to the peer WiFi device, the grant signal for indicating that exclusive access to the shared medium is granted is immediately transmitted to the Zigbee device;
(II) if the WiFi device is in a data reception state, after terminating the transmission of data to a peer WiFi device and enabling its own passive response reply special control frame mechanism, the grant signal for indicating that exclusive access to the shared medium is granted is immediately transmitted to the Zigbee device;
(III) if the WiFi device is in an idle state, after sending a notification message of terminating the transmission of data to the peer WiFi device, the grant signal for indicating that exclusive access to the shared medium is granted is immediately transmitted to the Zigbee device.

For the above situation (I), when the Zigbee device has a low delay tolerance for the grant signal for indicating that exclusive access to the shared medium is granted and the WiFi device is in a data transmission state, the WiFi device immediately terminates the transmission of data to the peer WiFi device and sends a notification message of terminating the transmission of data to the peer WiFi device, so that the peer WiFi device can acquire the information that the WiFi device terminates the transmission of data, thereby avoiding the peer WiFi device being in a data reception state all the time, which is conducive to saving power consumption.

According to actual needs, the WiFi device can send a notification message of terminating the transmission of data to the peer WiFi device through a NULL frame, a Clear to Send (CTS) frame, or a CTS-to-Self frame, etc., which is not limited here.

After terminating the transmission of data to the peer WiFi device and sending a notification message of terminating the transmission of data to the peer WiFi device, the WiFi device immediately transmits the grant signal for indicating that exclusive access to the shared medium is granted to the Zigbee device, which enables the Zigbee device to quickly acquire the right to use the shared medium, and can avoid the Zigbee device abandoning data transmission due to the long delay in acquiring the grant signal for indicating that exclusive access to the shared medium is granted, so as to improve the communication quality of the Zigbee device.

For the above situation (II), when the Zigbee device has a low delay tolerance for the grant signal for indicating that exclusive access to the shared medium is granted and the WiFi device is in a data reception state, the WiFi device immediately terminates the transmission of data to the peer WiFi device and enables its own passive response reply special control frame mechanism, which can avoid the increase of the link overhead of the communication channel caused by the peer WiFi device retransmitting data, which is conducive to further improving the communication quality of the Zigbee device.

The passive response reply special control frame mechanism means that the WiFi device only enables its own data reception function, and when receiving the data transmitted by the peer WiFi device, it transmits the corresponding special control frame to the peer WiFi device as a reply to the data received from the peer WiFi device.

The WiFi device can transmit the corresponding special control frame to the peer WiFi device according to different application scenarios, such as confirmation (ACK) frame, CTS frame and block confirmation (Block Ack, BA) frame, etc.

After terminating the transmission of data to the peer WiFi device and enabling its own passive response reply special control frame mechanism, the WiFi device immediately transmits the grant signal for indicating that exclusive access to the shared medium is granted to the Zigbee device, which enables the Zigbee device to quickly acquire the right to use the shared medium, and can avoid the Zigbee device abandoning data transmission due to the long delay in acquiring the grant signal for indicating that exclusive access to the shared medium is granted, so as to improve the communication quality of the Zigbee device.

For the above situation (III), when the Zigbee device has a low delay tolerance for the grant signal for indicating that exclusive access to the shared medium is granted and the WiFi device is in an idle state where it neither transmits nor receives data, the WiFi device sends a notification message of terminating the transmission of data to the peer WiFi device, so that the peer WiFi device can stop transmitting data to the WiFi device after receiving the notification message of terminating the transmission of data sent by the WiFi device, thereby avoiding the interference caused to the communication signal of the Zigbee device, so as to further improve the communication quality of the Zigbee device.

After sending a notification message of terminating the transmission of data to the peer WiFi device, the WiFi device immediately transmits a grant signal for indicating that exclusive access to the shared medium is granted to the Zigbee device, which enables the Zigbee device to quickly acquire the right to use the shared medium, thereby improving the communication quality of the Zigbee device.

In some embodiments, when the Zigbee device has a high delay tolerance for the grant signal for indicating that exclusive access to the shared medium is granted, the step of generating the grant signal for indicating that exclusive access to the shared medium is granted to the Zigbee device in a timely manner, according to the delay tolerance of the Zigbee device for the grant signal for indicating that exclusive access to the shared medium is granted includes the following three situations:
(A) if the WiFi device is in a data transmission state, after completing the transmission of data currently being transmitted to a peer WiFi device and sending a notification message of terminating the transmission of data to the peer WiFi device, the grant signal for indicating that exclusive access to the shared medium is granted is immediately transmitted to the Zigbee device;
(B) if the WiFi device is in a data reception state, after terminating the reception of data transmitted by a peer WiFi device, enabling its own passive response reply special control frame mechanism and sending a notification message of terminating the transmission of data to the peer WiFi device, the grant signal for indicating that exclusive access to the shared medium is granted is immediately transmitted to the Zigbee device;
(C) if the WiFi device is in an idle state, after sending a notification message of terminating the transmission of data to the peer WiFi device, the grant signal for indicating that exclusive access to the shared medium is granted is immediately transmitted to the Zigbee device.

For the above situation (A), when the Zigbee device has a high delay tolerance for the grant signal for indicating that exclusive access to the shared medium is granted and the WiFi device is in a data transmission state, the WiFi device does not immediately terminate transmitting data to the peer WiFi device, but first completes the transmission of data currently being transmitted, thereby helping to balance the communication quality of the WiFi device. At the same time, when the data currently being transmitted is completed, the WiFi device sends a notification message of terminating the transmission of data to the peer WiFi device, so that the peer WiFi device can acquire the information that the WiFi device terminates data transmission, thereby avoiding the peer WiFi device from being in a data reception state all the time, which is conducive to saving power consumption.

Therefore, after completing the transmission of data currently being transmitted to a peer WiFi device and sending a notification message of terminating the transmission of data to the peer WiFi device, the WiFi device immediately transmits a grant signal for indicating that exclusive access to the shared medium is granted to the Zigbee device, which can improve the communication quality of the Zigbee device while taking into account the communication quality of the WiFi device.

For the above situation (B), when the Zigbee device has a high delay tolerance for the grant signal for indicating that exclusive access to the shared medium is granted and the WiFi device is in a data reception state, the WiFi device does not immediately terminate the reception of the data transmitted by the peer WiFi device, but first completes the reception of the data currently being received, thereby taking into account the communication quality of the WiFi device. Moreover, when the data currently being received is completed, the WiFi device enables its own passive response reply special control frame mechanism and sends a notification message of terminating the transmission of data to the peer WiFi device, which can avoid the increase of the link overhead of the communication channel caused by the peer WiFi device retransmitting data, which is beneficial to reduce the interference between communication signals, thereby further improving the communication quality of Zigbee devices.

After terminating the reception of data transmitted by a peer WiFi device, enabling its own passive response reply special control frame mechanism and sending a notification message of terminating the transmission of data to the peer WiFi device, the WiFi device immediately transmits a grant signal for indicating that exclusive access to the shared medium is granted to the Zigbee device. Compared with the method in which the WiFi device transmits all data to the peer WiFi device and then transmits the grant signal for indicating that exclusive access to the shared medium is granted to the Zigbee device, the acquisition time of the grant signal for indicating that exclusive access to the shared medium is granted to be shortened, so that the Zigbee device can quickly acquire the right to use the shared medium, and can avoid the Zigbee device abandoning data transmission due to the long delay of the grant signal for indicating that exclusive access to the shared medium is granted, so as to improve the communication quality of the Zigbee device.

For the above situation (C), when the Zigbee device has a high delay tolerance for the grant signal for indicating that exclusive access to the shared medium is granted and the WiFi device is in an idle state where it neither transmits nor receives data, the WiFi device sends a notification message of terminating the transmission of data to the peer WiFi device, so that the peer WiFi device can stop transmitting data to the WiFi device after receiving the notification message of terminating the transmission of data sent by the WiFi device, thereby avoiding the interference caused to the communication signal of the Zigbee device, so as to further improve the communication quality of the Zigbee device.

After sending a notification message of terminating the transmission of data to the peer WiFi device, the grant signal for indicating that exclusive access to the shared medium is granted is immediately transmitted to the Zigbee device, which enables the Zigbee device to quickly acquire the right to use the shared medium, thereby improving the communication quality of the Zigbee device.

In some embodiments, after the Zigbee device cancels the request for exclusive access to the shared medium, the communication method for a WiFi device further includes: prohibiting the transmission of the grant signal for indicating that exclusive access to the shared medium is granted to the Zigbee device.

In some embodiments, when the Zigbee device converts the request signal for requesting exclusive access to the shared medium from a high level signal to a low level signal, it means that the Zigbee device has canceled the request for exclusive access to the shared medium. At this time, the WiFi device no longer needs to transmit a grant signal for indicating that exclusive access to the shared medium is granted to the Zigbee device. Therefore, the WiFi device is prohibited from transmitting a grant signal for indicating that exclusive access to the shared medium is granted to the Zigbee device.

In some embodiments, in the case where the Zigbee device defaults the request signal for requesting exclusive access to the shared medium to a high level signal, when the Zigbee device converts the request signal for requesting exclusive access to the shared medium from a low level signal to a high level signal, it means that the Zigbee device has canceled the request for exclusive access to the shared medium.

Correspondingly, a WiFi device is further provided in the embodiments of the present disclosure.

FIG. 3 shows a schematic structural diagram of an embodiment of a WiFi device according to the present disclosure. As shown in FIG. 3, a WiFi device 30 may include: a first acquisition circuit 301, configured to acquire a request signal for requesting exclusive access to a shared medium and a corresponding service priority signal of a Zigbee device; a second acquisition circuit 302, configured to acquire a delay tolerance of the Zigbee device for a grant signal for indicating that exclusive access to the shared medium is granted, according to the request signal for requesting exclusive access to the shared medium and the corresponding service priority signal transmitted by the Zigbee device; a grant signal generating circuit 303, configured to generate the grant signal for indicating that exclusive access to the shared medium is granted to the Zigbee device in a timely manner, according to the delay tolerance of the Zigbee device for the grant signal for indicating that exclusive access to the shared medium is granted.

The WiFi device in the embodiments of the present disclosure may be used to execute the aforementioned communication method for a WiFi device, or may also use other functional modules to execute the aforementioned communication method for a WiFi device. For the communication method for a WiFi device, please refer to the detailed description of the aforementioned part, which will not be repeated here.

Correspondingly, a communication system is further provided in the embodiments of the present disclosure, including a WiFi device provided in the aforementioned embodiments and a Zigbee device. For the WiFi device, please refer to the detailed description of the aforementioned part, which will not be repeated here.

Correspondingly, a device is further provided in the embodiments of the present disclosure, which can implement the communication method for a WiFi device provided by the embodiments of the present disclosure by loading the above communication method for a WiFi device in the form of a program.

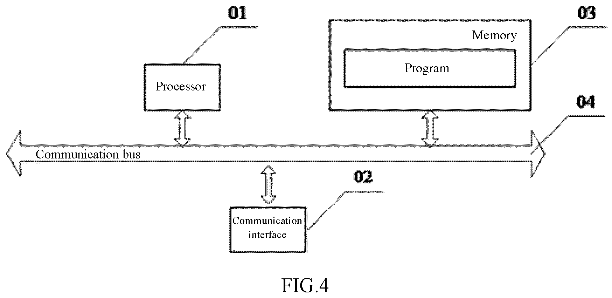

FIG. 4 shows a schematic structural diagram of an optional hardware structure of a device according to the present disclosure. In some embodiments, the device includes: at least one processor 01, at least one communication interface 02, at least one memory 03 and at least one communication bus 04.

In some embodiments, the number of processor 01, communication interface 02, memory 03 and communication bus 04 is at least one, and the processor 01, communication interface 02 and memory 03 communicate with each other through the communication bus 04.

The communication interface 02 can be an interface of a communication module for network communication, such as an interface of a GSM module.

The processor 01 may be a central processing unit CPU, or an application specific integrated circuit (ASIC), or one or more integrated circuits configured to implement the communication method for a WiFi device of the present disclosure.

The memory 03 may include a high-speed RAM memory, and may also include a non-volatile memory (non-volatile memory), such as at least one disk memory. Among them, the memory 03 stores one or more computer instructions, and the one or more computer instructions are executed by the processor 01 to implement the communication method for a WiFi device provided in the above-mentioned embodiments.

It should be noted that the above-mentioned electronic device for implementing may also include other devices (not shown) that may not be necessary for understanding the content disclosed in the embodiments of the present disclosure; in view of the fact that these other devices may not be necessary for understanding the content disclosed in the embodiments of the present disclosure, the embodiments of the present disclosure do not introduce them one by one.

Correspondingly, a computer program product is further provided in the embodiments of the present disclosure, comprising a computer program/instruction, wherein the computer program/instruction is used to implement the communication method for a WiFi device as described in the embodiments of the present disclosure when executed by a processor.

A storage medium is further provided in the embodiments of the present disclosure, wherein the storage medium stores one or more computer instructions, wherein the one or more computer instructions are used to implement the communication method for a WiFi device as described in any embodiment above.

The above-mentioned embodiments of the present disclosure are a combination of elements and features of the present disclosure. Unless otherwise mentioned, the elements or features may be regarded as optional. Each element or feature may be practiced without being combined with other elements or features. **In** addition, the embodiments of the present disclosure can be constructed by combining some elements and/or features. The order of operations described in the embodiments of the present disclosure can be rearranged. Some structures of any embodiment may be included in another embodiment and may be replaced by corresponding structures of another embodiment. It is obvious to those skilled in the art that claims in the attached claims that do not have an explicit reference relationship with each other may be combined into embodiments of the present disclosure, or may be included as new claims in amendments after the filing of this application.

The embodiments of the present disclosure may be implemented by various means such as hardware, firmware, software, or a combination thereof. In a hardware configuration, the method according to the exemplary embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, the embodiments of the present disclosure may be implemented in the form of modules, processes, functions, etc. The software code may be stored in a memory unit and executed by a processor. The memory unit is located inside or outside the processor and may send data to and receive data from the processor via various known means.

The above description of the disclosed embodiments enables those skilled in the art to implement or use the present disclosure. Various modifications to these embodiments will be apparent to those skilled in the art, and the general principles defined herein may be implemented in other embodiments without departing from the spirit or scope of the present disclosure. Thus, the present disclosure will not be limited to the embodiments shown herein but will be accorded the widest scope consistent with the principles and novel features disclosed herein.

Although disclosed as above, the present disclosure is not limited to the foregoing description. A person skilled in the art can make various changes and modifications without departing from the scope of the present disclosure. Thus, the scope of protection of the present disclosure should be subject to the scope defined by the claims.

## Claims

1. A communication method for a WiFi device, comprising:
acquiring a request signal for requesting exclusive access to a shared medium and a corresponding service priority signal of a Zigbee device;
acquiring a delay tolerance of the Zigbee device for a grant signal for indicating that exclusive access to the shared medium is granted, according to the request signal for requesting exclusive access to the shared medium and the corresponding service priority signal transmitted by the Zigbee device;
generating the grant signal for indicating that exclusive access to the shared medium is granted to the Zigbee device in a timely manner, according to the delay tolerance of the Zigbee device for the grant signal for indicating that exclusive access to the shared medium is granted.

2. The communication method for a WiFi device according to claim 1, wherein the step of acquiring a delay tolerance of the Zigbee device for a grant signal for indicating that exclusive access to the shared medium is granted, according to the request signal for requesting exclusive access to the shared medium and the corresponding service priority signal transmitted by the Zigbee device, comprising:
if the request signal for requesting exclusive access to the shared medium and the corresponding service priority signal transmitted by the Zigbee device are both converted from a first level signal to a second level signal, the Zigbee device has a low delay tolerance for the grant signal for indicating that exclusive access to the shared medium is granted;
if the request signal for requesting exclusive access to the shared medium transmitted by the Zigbee device is converted from a first level signal to a second level signal and the corresponding service priority signal is a first level signal, the Zigbee device has a high delay tolerance for the grant signal for indicating that exclusive access to the shared medium is granted.

3. The communication method for a WiFi device according to claim 1, wherein if the Zigbee device has a low delay tolerance for the grant signal for indicating that exclusive access to the shared medium is granted, the step of generating the grant signal for indicating that exclusive access to the shared medium is granted to the Zigbee device in a timely manner, according to the delay tolerance of the Zigbee device for the grant signal for indicating that exclusive access to the shared medium is granted, comprising:
if the WiFi device is in a data transmission state, after immediately terminating the transmission of data to a peer WiFi device and sending a notification message of terminating the transmission of data to the peer WiFi device, the grant signal for indicating that exclusive access to the shared medium is granted is immediately transmitted to the Zigbee device;
if the WiFi device is in a data reception state, after terminating the transmission of data to a peer WiFi device and enabling its own passive response reply special control frame mechanism, the grant signal for indicating that exclusive access to the shared medium is granted is immediately transmitted to the Zigbee device;
if the WiFi device is in an idle state, after sending a notification message of terminating the transmission of data to the peer WiFi device, the grant signal for indicating that exclusive access to the shared medium is granted is immediately transmitted to the Zigbee device.

4. The communication method for a WiFi device according to claim 1, wherein if the Zigbee device has a high delay tolerance for the grant signal for indicating that exclusive access to the shared medium is granted, the step of generating the grant signal for indicating that exclusive access to the shared medium is granted to the Zigbee device in a timely manner, according to the delay tolerance of the Zigbee device for the grant signal for indicating that exclusive access to the shared medium is granted, comprising:
if the WiFi device is in a data transmission state, after completing the transmission of data currently being transmitted to a peer WiFi device and sending a notification message of terminating the transmission of data to the peer WiFi device, the grant signal for indicating that exclusive access to the shared medium is granted is immediately transmitted to the Zigbee device;
if the WiFi device is in a data reception state, after terminating the reception of data transmitted by a peer WiFi device, enabling its own passive response reply special control frame mechanism and sending a notification message of terminating the transmission of data to the peer WiFi device, the grant signal for indicating that exclusive access to the shared medium is granted is immediately transmitted to the Zigbee device;
if the WiFi device is in an idle state, after sending a notification message of terminating the transmission of data to the peer WiFi device, the grant signal for indicating that exclusive access to the shared medium is granted is immediately transmitted to the Zigbee device.

5. The communication method for a WiFi device according to claim 3 or claim 4, wherein the step of sending a notification message of terminating the transmission of data to the peer WiFi device, comprising: using a NULL frame, a CTS frame or a Self-CTS frame to send the notification message of terminating the transmission of data to the peer WiFi device.

6. The communication method for a WiFi device according to claim 3 or claim 4, wherein the special control frame comprises at least one of an ACK frame, a CTS frame and a BA frame.

7. The communication method for a WiFi device according to claim 1, wherein if the Zigbee device cancels the request for requesting exclusive access to the shared medium, further comprising: prohibiting the transmission of the grant signal for indicating that exclusive access to the shared medium is granted to the Zigbee device.

8. The communication method for a WiFi device according to claim 7, wherein the step of Zigbee device cancels the request for requesting exclusive access to the shared medium, comprising: the Zigbee device converting the request signal for requesting exclusive access to the shared medium from a second level signal to a first level signal.

9. The communication method for a WiFi device according to claim 1, wherein the request signal for requesting exclusive access to the shared medium comprises a GPIO signal.

10. The communication method for a WiFi device according to claim 1, wherein the grant signal for indicating that exclusive access to the shared medium is granted comprises a GPIO signal.

11. The communication method for a WiFi device according to claim 1, wherein the service priority signal comprises a GPIO signal.

12. A WiFi device, comprising:
a first acquisition circuit, configured to acquire a request signal for requesting exclusive access to a shared medium and a corresponding service priority signal of a Zigbee device;
a second acquisition circuit, configured to acquire a delay tolerance of the Zigbee device for a grant signal for indicating that exclusive access to the shared medium is granted, according to the request signal for requesting exclusive access to the shared medium and the corresponding service priority signal transmitted by the Zigbee device;
a grant signal generating circuit, configured to generate the grant signal for indicating that exclusive access to the shared medium is granted to the Zigbee device in a timely manner, according to the delay tolerance of the Zigbee device for the grant signal for indicating that exclusive access to the shared medium is granted.

13. A communication system, comprising a WiFi device and a Zigbee device, wherein the WiFi device comprises:
a first acquisition circuit, configured to acquire a request signal for requesting exclusive access to a shared medium and a corresponding service priority signal of a Zigbee device;
a second acquisition circuit, configured to acquire a delay tolerance of the Zigbee device for a grant signal for indicating that exclusive access to the shared medium is granted, according to the request signal for requesting exclusive access to the shared medium and the corresponding service priority signal transmitted by the Zigbee device;
a grant signal generating circuit, configured to generate the grant signal for indicating that exclusive access to the shared medium is granted to the Zigbee device in a timely manner, according to the delay tolerance of the Zigbee device for the grant signal for indicating that exclusive access to the shared medium is granted.

14. A computer program product, comprising a computer program/instruction, wherein the computer program/instruction is used to implement the communication method for a WiFi device as claimed in any one of claims 1-11 when executed by a processor.

15. A device, comprising at least one memory and at least one processor, the memory stores one or more computer instructions, wherein the one or more computer instructions are executed by the processor to implement the communication method for a WiFi device as claimed in any one of claims 1-11.
